# EUROPEAN PATENT APPLICATION

(11) **EP 4 467 617 A1**
(43) Date of publication of application: **27.11.2024**
(21) Application number: 23763377.1
(22) Date of filing: 27.02.2023
(51) Int. Cl.: C08L 101/00, C08K 3/04, F16C 33/12, F16C 33/20

(54) **RESIN COMPOSITION FOR SLIDING, AND SLIDING MEMBER**

(30) Priority: 04.03.2022 JP 2022033923
(71) Applicant: Oiles Corporation, Kanagawa 252-0811 (JP)
(72) Inventor: TAKECHI Ryuto, Fujisawa-shi, Kanagawa 252-0811 (JP); SAITO Aoi, Fujisawa-shi, Kanagawa 252-0811 (JP); TAKAHASHI Kohei, Fujisawa-shi, Kanagawa 252-0811 (JP)
(74) Representative: Patentanwälte Bressel und Partner mbB
(86) International application number: PCT/JP2023/006914
(87) International publication number: WO 2023/167118

(57) **Abstract**

A resin composition for a sliding material that can provide a sliding member having excellent sliding properties and the like under dry conditions even in a case where a soft metal such as an aluminum alloy is used as a mating material, and the like are provided. Disclosed are a resin composition for a sliding material in which 10 to 400 parts by weight of uncarbonized carbon fiber having a 5% weight loss temperature having a value within the range of 400 to 550°C as measured by thermogravimetry, as a blending component (b), and 10 to 80 parts by weight of a lubricating additive as a blending component (c) are blended with 100 parts by weight of a resin component as a blending component (a), and the like.

## Description

### TECHNICAL FIELD

The present invention relates to a resin composition for a sliding material and a sliding member.

More specifically, the invention relates to a resin composition for a sliding material that can provide a sliding member having favorable sliding properties under dry conditions even in a case where a soft metal such as an aluminum alloy is used as a mating material, and to a sliding member derived from such a resin composition for a sliding material.

### BACKGROUND ART

Sliding members containing a predetermined resin as a base resin are often used in sliding parts for automobile parts, electric and electronic products, office appliances, and various industrial appliances such as submersible pumps.

For example, conventional submersible pumps have been used in various use applications such as devices for pumping water from rivers and the sea as well as water circulation and the like in water heaters, floor heating appliances, automobile engines, inverters, batteries, and fuel cells.

One example of such submersible pumps (water pumps) includes the following configurations 1) to 5) and is configured to include predetermined sliding members (a slide bearing and a thrust-bearing member) (see, for example, Patent Document 1):
1) an impeller;
2) a shaft for fixing the impeller;
3) a slide bearing fixed to the impeller for supporting the impeller in a freely rotatable manner relative to the shaft;
4) a thrust-bearing member sliding against each end face of the slide bearing; and
5) a casing and a cover housing the impeller and forming a pump chamber.

A slide bearing, which is a sliding member, is a cylindrical-shaped bearing that receives loads at the inner diameter and the end faces and has the same thickness as the end faces, and is an injection molded article derived from a resin composition containing a straight-chained polyphenylene sulfide resin as a base resin.

That is, the slide bearing is an injection molded article derived from a resin composition including carbon fiber and at least one of a polytetrafluoroethylene resin and graphite with respect to a predetermined base resin, and has a feature that the carbon fiber is a carbonized article fired at 1000 to 1500°C.

Furthermore, during rotation of the impeller, a slide bearing and a sliding thrust receiving member rotate relative to each other, and as a result, a suction means (groove) that draws circulating water from one end face of the slide bearing to the bearing inner diameter surface, and a discharge means (groove) that discharges circulating water from the bearing inner diameter surface side to the other end face of the slide bearing are provided to thereby circulate and supply a large amount of water to the sliding surface.

Furthermore, a sliding member formed using a predetermined uncarbonized carbonaceous fiber, which is different from the uncarbonized carbon fiber of the invention, as a reinforcing material has also been proposed (see, for example, Patent Document 2).

More specifically, it is a sliding member formed from a sintered body which has a predetermined shape and is obtained by sintering a composite body composed of the following blending components 1) to 3).

The sliding member is a sliding member which is obtained by, for example, supplying raw material pitch to a spinner, extruding the raw material pitch through a nozzle in a state of being heated to 300 to 400°C under pressure of an inert gas to obtain a raw material fiber, and then retaining the obtained raw material fiber in an oxidizing atmosphere at about 150 to 500°C for about 0.5 to 5 hours to be insolubilized to become a carbon fiber, and which contains a predetermined amount of the carbon fiber as uncarbonized carbonaceous fiber.
1) Uncarbonized carbonaceous fiber obtained by a heat treatment at a temperature of 550°C or lower
2) Inorganic powder or inorganic fiber of a boron compound or the like
3) Uncarbonized carbonaceous fiber, and an inorganic powder of a boron compound or the like or carbonaceous powder having self-sinterability in which the inorganic fiber is embedded

Uncarbonized carbonaceous fiber is defined to mean a carbonaceous fiber that has not been subjected to a conventional carbonization treatment, which may be possibly heat-treated (firing), for example, at a temperature not exceeding 550°C and further carbonized.

According to the Examples of Patent Document 2, the composite body composed of the above-described 1) to 3) is all heated to 1000°C in a non-oxidizing atmosphere or a nitrogen gas atmosphere at normal pressure to be subjected to primary sintering, and is further heated to 1300°C, 1700°C, or 2000°C in the same atmosphere to be subjected to secondary sintering. Therefore, the uncarbonized carbonaceous fiber of Patent Document 2 is ultimately heat-treated at a temperature of substantially 1000°C or higher.

### CITATION LIST

### PATENT DOCUMENT

Patent Document 1: JP 6639592 B2 (claims and the like)
Patent Document 2: JP H3-237062 A (claims and the like)

### SUMMARY OF THE INVENTION

### PROBLEM TO BE SOLVED BY THE INVENTION

In the case of the submersible pump (water pump) described in Patent Document 1, in the early stage of pump operation, there is no water circulating between the sliding surfaces of the slide bearing and the shaft, and between the sliding surfaces of the slide bearing and the thrust receiving member, and friction occurs under dry conditions.

Therefore, the slide bearing is required to have satisfactory sliding properties even under dry conditions. However, although this slide bearing exhibits satisfactory sliding properties when there is water supplied to the sliding surfaces, and water is effectively supplied to the sliding surfaces by the suction means (groove) and the discharge means (groove) for water, the slide bearing exhibits neither satisfactory friction properties nor satisfactory wear properties under dry conditions.

In addition, the sliding members (slide bearing and the like) used in the submersible pump (water pump) described in Patent Document 1 are characterized in that a carbonized product fired at 1000 to 1500°C is used as a reinforcing fiber for a predetermined resin.

Therefore, when such a sliding member is to be used as a sliding member such as a bearing for an automobile part, an electric or electronic product, an office appliance, or the like under dry conditions all the time, there is a problem that the blended carbon fiber (carbonized product) damages the mating material, and particularly when a soft metal such as an aluminum alloy is used as the mating material, the damage becomes more significant. This problem also occurs when a graphitized product fired at 2000° or higher is used as the carbon fiber.

Avoiding the use of carbon fibers may be considered as a countermeasure; however, in that case, there is a problem that depending on the conditions of usage, the strength of the sliding member (slide bearing) is insufficient, and sufficient wear resistance is not obtained.

Furthermore, with regard to the sliding member described in Patent Document 2, it was necessary to use uncarbonized carbonaceous fiber obtained by firing at an extremely low temperature, and there was a problem that it is still difficult to obtain satisfactory sliding properties.

That is, for example, it was necessary to use uncarbonized carbonaceous fiber obtained by extruding raw material pitch through a nozzle at 300 to 400°C under pressure of an inert gas to obtain a raw material fiber, and then retaining the raw material fiber in an oxidizing atmosphere at about 150 to 500°C for about 0.5 to 5 hours.

This is for the purpose of enhancing the interfacial adhesion with a carbonaceous powder having self-sinterability, and ultimately, the desired strength could not be obtained unless primary sintering is performed by heating the uncarbonized carbonaceous fiber to 1000°C in a non-oxidizing atmosphere or a nitrogen gas atmosphere at normal pressure as described above, and secondary sintering is performed by heating the resultant to 1300°C, 1700°C, or 2000°C in the same atmosphere.

In addition, the sliding member described in Patent Document 2 is an invention related to a carbon fiber-reinforced carbon composite material, a so-called C/C composite, and there is no description or consideration on blending the uncarbonized carbonaceous fiber described in Patent Document 2 into a resin composition.

Thus, the inventors conducted an extensive investigation and found that when a predetermined amount of a predetermined uncarbonized carbon fiber is blended into a resin composition for a sliding material, a sliding member obtained from such a resin composition for a sliding material has satisfactory sliding properties under dry conditions, even in a case where a soft metal such as an aluminum alloy is used for the mating material, thus completing the invention.

That is, it is an object of the invention to provide a resin composition for a sliding material obtained by blending a resin component as a blending component (a) with uncarbonized carbon fiber as a blending component (b) and a lubricating additive as a blending component (c), each in a predetermined proportion, the resin composition for a sliding material being capable of giving a sliding member that has a low friction coefficient and could reduce the wear amount over a long period of time, and a sliding member derived from the resin composition for a sliding material.

### MEANS FOR SOLVING PROBLEM

According to the invention, a resin composition for a sliding material having the following blending components (a) to (c) is provided, and the above-mentioned problems can be solved:
(a) 100 parts by weight of a resin component;
(b) 10 to 400 parts by weight of uncarbonized carbon fiber having a 5% weight loss temperature of 400 to 550°C; and
(c) 10 to 80 parts by weight of a lubricating additive.

In this way, when a resin composition for a sliding material obtained by blending a resin component as a blending component (a) with uncarbonized carbon fiber as a blending component (b) having a predetermined 5% weight loss temperature (hereinafter, may be referred to as TG5.), which is determined by thermogravimetry under predetermined conditions, and with a lubricating additive as a blending component (c), each in a predetermined proportion, is used, a sliding member that has a low friction coefficient and could reduce the wear amount over a long period of time could be obtained.

That is, when the resin composition for a sliding material of the invention is processed into a bearing or the like for an office appliance or the like and used, even in a case where a soft metal such as an aluminum alloy is used as the mating material, the resin composition for a sliding material could exhibit satisfactory sliding properties over a long period of time under dry conditions.

Upon configuring the resin composition for a sliding material of the invention, it is preferable that a tensile modulus of the blending component (b) as measured according to JIS R 7606:2000 has a value within a range of 10 to 35 GPa.

In this way, by specifying the tensile modulus of the blending component (b), a resin composition for a sliding material which, when processed into a predetermined sliding member, has a friction coefficient and a wear amount equal to or less than predetermined values, could be provided more easily and stably.

Furthermore, upon configuring the resin composition for a sliding material of the invention, it is preferable that a tensile elongation of the blending component (b) as measured according to JIS R 7606:2000 has a value within a range of 2 to 5%.

In this way, by specifying the tensile elongation of the blending component (b), a resin composition for a sliding material which, when processed into a predetermined sliding member, is likely to have a friction coefficient and a wear amount equal to or less than predetermined values, could be provided more easily and stably.

Furthermore, upon configuring the resin composition for a sliding material of the invention, it is preferable that an amount of carbon on a surface of the blending component (b) as determined by XPS elemental analysis has a value within a range of 85 to 96% by weight with respect to a total amount.

In this way, by specifying the amount of carbon on the surface of the blending component (b) as determined by XPS elemental analysis to a value within a predetermined range, when the resin composition for a sliding material is processed into a predetermined sliding member, the sliding member could exhibit excellent sliding properties and the like over a long period of time in a more quantifiable manner.

Furthermore, upon configuring the resin composition for a sliding material of the invention, it is preferable that a weight ratio of blending component (b)/blending component (c) has a value within a range of 0.5/1 to 30/1.

In this way, by specifying the weight ratio of blending component (b)/blending component (c), when the resin composition for a sliding material is processed into a predetermined sliding member, the sliding member could exhibit more excellent sliding properties and the like over a long period of time.

Furthermore, upon configuring the resin composition for a sliding material of the invention, it is preferable that the blending component (a) is at least one selected from the group consisting of a polyphenylene sulfide resin, a polyether sulfone resin, a polyether ether ketone resin, a polyimide resin, a polyamide resin, a polyacetal resin, a polytetrafluoroethylene resin, a polyketone resin, a thermosetting phenol resin, an epoxy resin, a melamine resin, a diallyl phthalate resin, and an unsaturated polyester resin.

In this way, by specifying the kind of the blending component (a), a resin composition for a sliding material which, when processed into a predetermined sliding member, has satisfactory processability and mechanical strength and is likely to have a friction coefficient and a wear amount equal to or less than predetermined values, could be provided more easily and stably.

When a polytetrafluoroethylene resin is used as the blending component (a), the lubricating additive as the blending component (c) is not an essential blending component upon configuring the resin composition for a sliding material of the invention and could be omitted.

Another aspect of the invention is a sliding member derived from a resin composition for a sliding material including the following blending components (a) to (c):
(a) 100 parts by weight of a resin component;
(b) 10 to 400 parts by weight of uncarbonized carbon fiber having a 5% weight loss temperature of 400 to 550°C; and
(c) 10 to 80 parts by weight of a lubricating additive.

In this way, when a predetermined processed sliding member derived from a resin composition for a sliding material which is obtained by blending a predetermined amount of a predetermined uncarbonized carbon fiber or the like as the blending component (b), is used, the sliding member has a low friction coefficient and could reduce the wear amount over a long period of time.

That is, when such a sliding member is used as a bearing or the like of a submersible pump or the like, the sliding member could exhibit satisfactory sliding properties under dry conditions over a long period of time, even in a case where a soft metal such as an aluminum alloy is used as the mating material.

### BRIEF DESCRIPTION OF DRAWINGS

Figs. 1A and 1B are figures provided to describe the relationships between the firing temperature of carbon fiber and the friction coefficient and the wear amount of a sliding member, respectively;
Fig. 2 is a figure provided to describe the relationship between the firing temperature of carbon fiber and the 5% weight loss temperature (TG5) of carbon fiber;
Figs. 3A and 3B are figures provided to describe the relationships between the firing temperature of carbon fiber and the tensile modulus and the tensile elongation of carbon fiber;
Fig. 4 is a figure provided to describe the relationship between the firing temperature of carbon fiber and the volume resistivity (logarithmic notation) of carbon fiber;
Figs. 5A and 5B are figures provided to describe the relationships between the blending amount of uncarbonized carbon fiber and the friction coefficient and the wear amount of a sliding member, respectively;
Figs. 6A and 6B are figures provided to describe the relationships between the weight ratio of uncarbonized carbon fiber as the blending component (b)/ the lubricating additive as the blending component (c), and the friction coefficient and the wear amount of a sliding member, respectively; and
Fig. 7 is a figure provided to describe the configuration of a copying machine that uses a sliding member.

### MODE(S) FOR CARRYING OUT THE INVENTION

### [First embodiment]

A first embodiment is a resin composition for a sliding material, containing the following blending components (a) to (c):
(a) 100 parts by weight of a resin component;
(b) 10 to 400 parts by weight of uncarbonized carbon fiber having a 5% weight loss temperature of 400 to 550°C; and
(c) 10 to 80 parts by weight of a lubricating additive.

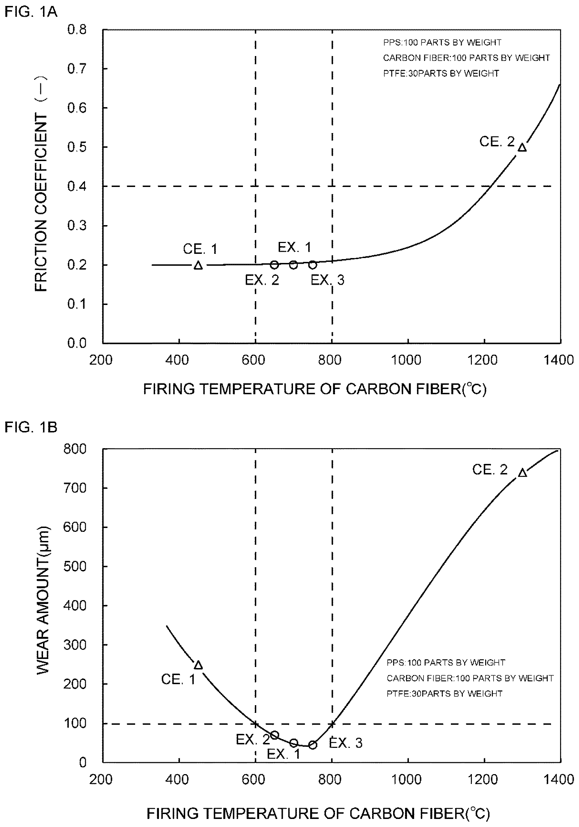

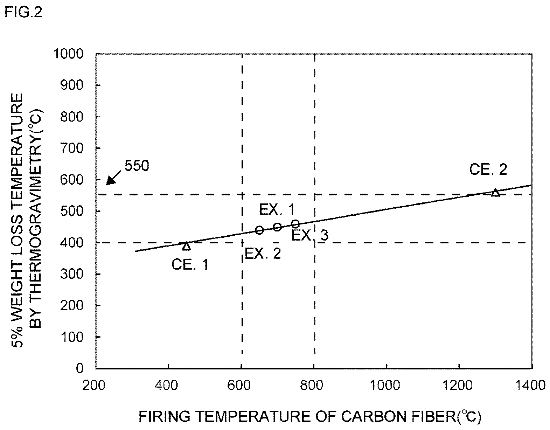

That is, as shown in Fig. 1, the first embodiment is a resin composition for a sliding material obtained by obtaining, under predetermined conditions as shown in Fig. 2, uncarbonized carbon fiber having a predetermined 5% weight loss temperature (TG5) as measured by a thermogravimetric analyzer (TGA) so as to control the friction coefficient for a sliding member derived from a resin composition for a sliding material, and blending a predetermined amount of the uncarbonized carbon fiber as the blending component (b) with respect to a resin component, which is the blending component (a), and a lubricating additive, which is the blending component (c).

Hereinafter, the blending components (a) to (c) and the like constituting the resin composition for a sliding material of the first embodiment will be described more specifically, with reference to the drawings as appropriate.

### 1. Blending component (a)

### (1) Kind

The kind of the resin component as the blending component (a) is not particularly limited, and any known resin component used for sliding members could be suitably used.

More specifically, among known resin components, the resin component is preferably at least one resin selected from the group consisting of a polyphenylene sulfide resin (PPS), a polyether ether ketone resin (PEEK), a polyether sulfone resin (PES), a polyimide resin (PI), a polyamide resin (PA), a polyacetal resin (POM), a polytetrafluoroethylene resin (PTFE), a polyketone resin (PK), a thermosetting phenol resin (PF), an epoxy resin (EP), a melamine resin (MF), a diallyl phthalate resin (PDAP), and an unsaturated polyester resin (UP).

The reason for this is that such a resin has satisfactory processability, and therefore, the resin could be easily processed into a predetermined sliding member and has the mechanical strength required for a sliding member.

Therefore, a resin composition for a sliding material that has a friction coefficient and a wear amount equal to or less than predetermined values and is easily adjustable, could be provided more easily and stably.

Furthermore, particularly among the above-described resin components, a polyphenylene sulfide resin, a polyether ether ketone resin, a polyether sulfone resin, a polyamide resin, and a polyacetal resin are more preferable.

The resin component as the blending component (a) may be used as a main component, and as a guideline, for example, the content is preferably 50% by weight or more, more preferably 70% by weight or more, and even more preferably 90% by weight or more, when the total amount of the resin component is taken as 100% by weight.

Furthermore, among these resins as the blending component (a), a polyphenylene sulfide resin (also including modified products of a polyphenylene sulfide resin; hereinafter, may be simply referred to as a PPS resin.) is most suitable.

The reason for this is that a PPS resin is usually a thermoplastic resin that is crystalline and semitransparent, has a melting point of about 280°C and a high glass transition point of 93°C, and has extremely high rigidity and excellent heat resistance, dimensional stability, wear resistance, low water absorption properties, and the like.

Furthermore, it is because a PPS resin has low melt viscosity and has excellent productivity from the viewpoint that large amounts of uncarbonized carbon fiber and a lubricating additive could be added.

In addition, it is because PPS resins are classified into a crosslinked polymer, a linear polymer, and a semi-linear polymer depending on the molecular structure thereof, and each of PPS resins could be suitably used singly or in combination of two or more kinds thereof.

Among the PPS resins, a linear polymer having toughness is particularly preferable in order to form a slide bearing taking into consideration of an abrasive wear mode such as a state in which foreign matter is caught therein.

Furthermore, when a polyamide resin is used as the blending component (a), the polyamide resin is preferably at least one resin selected from the group consisting of PA6 (polyamide 6; hereinafter, will be indicated as abbreviations in the same manner.), PA11, PA12, PA66, PA610, PA4T, PA6T, PA6I, PA9T, PA10T, and PAM5T.

### (2) Blending amount

The blending amount of the resin component as the blending component (a) could be determined while taking into consideration of the heat resistance, moldability, mechanical strength, and the like of the resulting sliding member; however, usually, it is preferable that the blending amount of the blending component (a) has a value within the range of 10 to 90% by weight when the total amount (100% by weight) of the resin composition for a sliding material is taken.

The reason for this is that when the blending amount of the blending component (a) is below 10% by weight, the blending amount of uncarbonized carbon fiber (for example, a product fired at 600 to 800°C) as the blending component (b) becomes relatively large, whereby accordingly the melt viscosity of the resin composition for a sliding material becomes excessively high, molding processability is deteriorated, and it may be difficult to obtain a sliding member that exhibits excellent sliding properties and the like.

On the other hand, it is because when the blending amount of the blending component (a) is exceeding 90% by weight, the blending amounts of uncarbonized carbon fiber as the blending component (b) and a lubricating additive as the blending component (c) are relatively reduced, the mechanical strength and the like of the resulting sliding member may be notably decreased, and there are occasions in which excellent sliding properties could not be exhibited.

Therefore, it is more preferable that the blending amount of the blending component (a) has a value within the range of 15 to 45% by weight, and even more preferably a value within the range of 20 to 40% by weight, with respect to the total amount of the resin composition for a sliding material.

### 2. Blending component (b)

### (1) 5% weight loss temperature determined by thermogravimetry

With regard to the uncarbonized carbon fiber as the blending component (b), the temperature at which 5% weight loss occurs (hereinafter, may be referred to as TG5.), which is measured using TGA under the conditions of an air flow rate of 100 ml/min and a temperature increase rate of 5°C/min, has a value within the range of 400 to 550°C.

The reason for this is that when the TG5 is lower than 400°C, the heat resistance, mechanical strength, and the like are excessively decreased, and when the resin composition for a sliding material is processed into a predetermined sliding member, durability and the like are notably deteriorated.

On the other hand, it is because when the TG5 exceeds 550°C, the heat resistance, mechanical strength, and the like are improved; however, when the resin composition is processed into a predetermined sliding member, the friction coefficient increases.

Therefore, it is more preferable that the TG5 has a value within the range of 430 to 500°C, and even more preferably a value within the range of 450 to 490°C.

The TG5 can be measured by taking the temperature at which 5% weight loss occurs when the initial weight is taken as 100% by weight in a weight loss chart obtained using a TGA, as a measure.

Furthermore, the TG5 of the uncarbonized carbon fiber could be basically limited to a value within a predetermined range by adjusting the firing temperature.

That is, it has been found that when the carbonized product described in Patent Document 1 of the prior art is a carbon fiber obtained by firing at least 1000°C or higher, and preferably at 1300 to 1500°C, the TG5 exceeds 700°C.

Furthermore, the uncarbonized carbonaceous fiber described in Patent Document 2 of the prior art is fired at a temperature of 500°C or lower; however, it has been found that the degree of carbonization is considerably low, and the TG5 is lower than 400°C.

Therefore, it could be said that upon producing a predetermined uncarbonized carbon fiber as the blending component (b), it is usually preferable to set the firing temperature to be within the range of 600 to 800°C.

Therefore, the TG5 of the predetermined uncarbonized carbon fiber as the blending component (b) is, in terms of the degree of carbonization, higher than that of uncarbonized carbonaceous fiber fired at a temperature of 500°C or lower while is lower than that of a carbonized product fired at a temperature of 1000°C or higher, and the uncarbonized carbon fiber is a low-temperature carbonized material that is clearly distinguished from conventional carbon fibers.

That is, the uncarbonized carbon fiber of the blending component (b) could be clearly distinguished from uncarbonized carbonaceous fiber (low-temperature carbonized material) and carbonized products because significant differences in properties could be seen in the tensile modulus, tensile elongation, surface elemental analysis (amount of carbon) by XPS, volume resistivity, saturated moisture percentage, and the like, as will be described below.

Here, referring to Fig. 2, the relationship between the firing temperature of carbon fiber (including uncarbonized carbon fiber and other carbon fiber; hereinafter, the same applies.) and the 5% weight loss temperature (TG5) determined by TGA, which is one of thermal decomposition temperatures of carbon fiber, will be described.

That is, the axis of abscissa in Fig. 2 represents the firing temperature (°C) of carbon fiber, and the axis of ordinate represents the value of TG5 (°C) of the carbon fiber.

The characteristic curve in Fig. 2 is based on the results related to the TG5 of the carbon fibers used in Examples 1 to 3 and Comparative Examples 1 and 2, in which only the firing temperature is different, as will be described below.

Furthermore, in the figure, Example 1 is described as EX1, Comparative Example 1 is described as CE1, and the same applies hereinafter.

As can be understood from the characteristic curve in Fig. 2, as the firing temperature of the carbon fiber is lower, the value of TG5 tends to be lower accurately correspondingly, that is, the values tend to be proportional.

More specifically, when the firing temperature of the carbon fiber exceeds 1200°C, the TG5 exceeds 550°C; however, when the firing temperature of the carbon fiber is 600 to 800°C, the TG5 has a value within the range of 400 to 550°C, while when the firing temperature of the carbon fiber is lower than 600°C, the TG5 may be lower than 400°C.

Therefore, by adjusting the firing temperature of the carbon fiber to a predetermined range by judging from the results of the characteristic curve shown in Fig. 2, it could be said that the TG5 of the carbon fiber could be accurately controlled to a predetermined temperature.

### (2) Morphology

Furthermore, the average fiber diameter (diameter) of the uncarbonized carbon fiber as the blending component (b) usually has a value of 30 µm or less, preferably a value within the range of 3 to 25 µm, and more preferably a value within the range of 5 to 20 µm, and the average fiber diameter could be appropriately determined according to the use application, ease of use, and the like.

Similarly, the average length of the uncarbonized carbon fiber of the blending component (b) usually has a value of 500 µm or less, preferably a value within the range of 50 to 450 µm, and more preferably a value within the range of 100 to 400 µm; however, even this could be appropriately determined according to the use application, ease of use, and the like.

### (3) Tensile modulus

Furthermore, it is preferable that the tensile modulus of the uncarbonized carbon fiber as the blending component (b) usually has a value within the range of 10 to 35 GPa.

The reason for this is that when the tensile modulus of the uncarbonized carbon fiber has a value below 10 GPa, in a case where the resin composition for a sliding material is processed into a predetermined sliding member, the mechanical strength and wear resistance may be notably deteriorated.

On the other hand, it is because when the tensile modulus of the uncarbonized carbon fiber exceeds 35 GPa, the friction coefficient of the resulting sliding member may be increased.

Therefore, it is more preferable that the tensile modulus of the uncarbonized carbon fiber as the blending component (b) has a value within the range of 13 to 30 GPa, and even more preferably a value within the range of 16 to 25 GPa.

The tensile modulus of the uncarbonized carbon fiber can be measured according to JIS R 7606:2000.

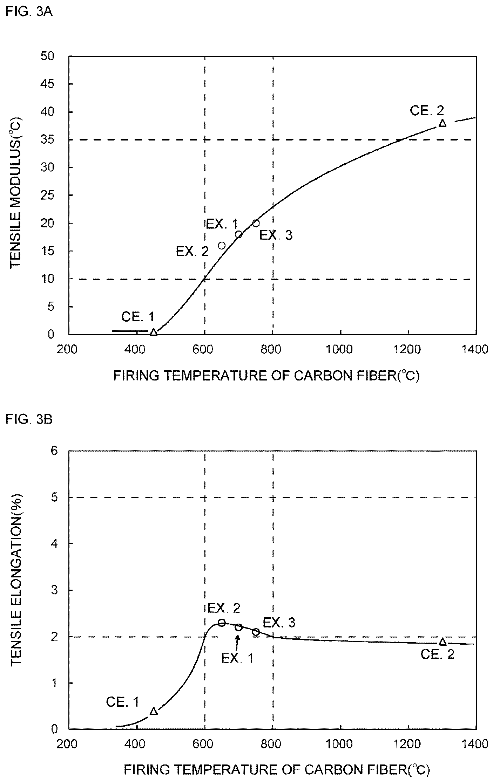

Here, referring to Fig. 3A, the relationship between the firing temperature (°C) and the tensile modulus of carbon fiber (including uncarbonized carbon fiber and other carbon fiber.) will be described.

That is, the axis of abscissa in Fig. 3A represents the firing temperature (°C) of carbon fiber, and the axis of ordinate represents the value of tensile modulus of the carbon fiber.

The characteristic curve in Fig. 3A is based on the tensile moduli of the carbon fibers blended in Examples 1 to 3 and Comparative Examples 1 and 2, in which only the firing temperature of the carbon fiber is different, as will be described below.

As can be understood from the characteristic curve in Fig. 3A, as the firing temperature of carbon fiber is higher, the value of the tensile modulus of the carbon fiber tends to be remarkably high.

More specifically, when the firing temperature of carbon fiber is lower than 600°C, the tensile modulus is below 10 GPa, and in a case where the firing temperature of carbon fiber is 450°C, the tensile modulus has a considerably low value of below 1 GPa.

Furthermore, it has been found that when the firing temperature of carbon fiber is 600 to 800°C, the tensile modulus acquires a value of at least 10 GPa or more, and when other production conditions (stretching conditions and firing time) and the like are changed, a value of about 35 GPa at the maximum is obtained.

Furthermore, when the firing temperature of carbon fiber exceeds 1200°C, the tensile modulus has a value of above 35 GPa.

Therefore, it could be said that the tensile modulus of carbon fiber could be reliably controlled to a value within a desired range by adjusting the firing temperature of the carbon fiber to a predetermined range.

### (4) Tensile elongation

Furthermore, it is preferable that the tensile elongation of the uncarbonized carbon fiber as the blending component (b) usually has a value within the range of 2 to 5%.

The reason for this is that when the tensile elongation of the uncarbonized carbon fiber has a value of below 2%, the friction coefficient of the resulting sliding member may be increased.

On the other hand, it is because when the tensile elongation of the uncarbonized carbon fiber itself exceeds 5%, in a case where the resin composition for a sliding material is processed into a sliding member, the mechanical strength and wear resistance may be notably decreased.

Therefore, it is more preferable that the tensile elongation has a value within the range of 2.1 to 4%, and even more preferably a value within the range of 2.2 to 3%.

The tensile elongation of the uncarbonized carbon fiber can be measured according to JIS R 7606:2000.

Here, referring to Fig. 3B, the relationship between the firing temperature (°C) and the tensile elongation of carbon fiber (including uncarbonized carbon fiber and other carbon fiber.) will be described.

That is, the axis of abscissa in Fig. 3B represents the firing temperature (°C) of carbon fiber, and the axis of ordinate represents the value of tensile elongation of the carbon fiber.

The characteristic curve in Fig. 3B is based on the results related to the tensile elongation of the carbon fibers used in Examples 1 to 3 and Comparative Examples 1 and 2, in which only the firing temperature is different, as will be described below.

As can be understood from the characteristic curve described in Fig. 3B, when the firing temperature (°C) of carbon fiber is lower than at least 600°C, as the firing temperature is lower, the value of tensile elongation of the carbon fiber tends to be markedly small.

More specifically, when the firing temperature of carbon fiber is lower than 600°C, the tensile elongation has a value significantly below 2%.

Furthermore, it has been found that when the firing temperature of carbon fiber is 600 to 800°C, the tensile elongation acquires a value of at least 2% or more, and when other production conditions (stretching conditions and firing time) and the like are changed, a value of 5% at the maximum is obtained.

In addition, when the firing temperature of carbon fiber exceeds 800°C, the tensile elongation has a small value of below 2%.

Therefore, it could be said that the value of tensile elongation of carbon fiber could be accurately controlled to a value within a desired range by adjusting the firing temperature of the carbon fiber to a predetermined range.

### (5) XPS elemental analysis (amount of carbon)

It is preferable that the amount of carbon determined by XPS elemental analysis on the surface of the uncarbonized carbon fiber as the blending component (b) has a value within the range of 85 to 96% by weight with respect to 100% by weight of the total amount.

The reason for this is that by specifying the amount of carbon to a value within a predetermined range, unlike conventional carbonized products and uncarbonized carbonaceous fibers, a resin composition for a sliding material which, when processed into a predetermined sliding member, a friction coefficient, has a friction coefficient and a wear amount equal to or less than predetermined values, could be provided more easily and stably.

More specifically, it is because when the amount of carbon has a value of below 85% by weight, the mechanical strength, wear resistance, and the like of the resulting sliding member may be notably decreased.

On the other hand, it is because when the amount of carbon has a value exceeding 96% by weight, the friction coefficient may be increased.

Therefore, it is more preferable that the amount of carbon has a value within the range of 86 to 95% by weight, and even more preferably a value within the range of 88 to 94% by weight, with respect to the total amount.

The amount of carbon can be measured according to XPS elemental analysis, on the basis of a calibration curve for carbon element.

### (6) Volume resistivity

Furthermore, it is preferable that the volume resistivity of the uncarbonized carbon fiber as the blending component (b) usually has a value within the range of 1×10⁰ to 1×10⁴ ohm·cm.

The reason for this is that by specifying the volume resistivity to a value within a predetermined range, when the resin composition for a sliding material is processed into a predetermined sliding member, unlike conventional carbonized products and uncarbonized carbonaceous fibers, a sliding member having excellent electrical insulation properties, antistatic properties, and the like could be more easily and stably provided in a quantifiable manner.

More specifically, it is because when the volume resistivity has a value of below 1×10⁰ ohm·cm, the antistatic properties are improved; however, the electrical insulation properties of the sliding member are insufficient, and there may be problems such as sparks to the outside.

On the other hand, it is because when the volume resistivity has a value exceeding 1×10⁴ ohm·cm, the electrical insulation properties are improved; however, in contrast, static electricity may accumulate in the sliding member, and the antistatic properties may be insufficient.

Therefore, it is more preferable that the volume resistivity has a value within the range of 5×10⁰ to 5×10³ ohm·cm, and even more preferably a value within the range of 1×10¹ to 1×10³ ohm·cm.

The volume resistivity can be measured according to a four-terminal method, using a commercially available digital voltmeter or the like.

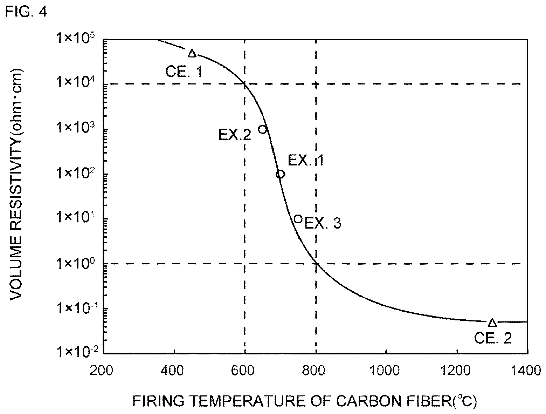

Here, referring to Fig. 4, the relationship between the firing temperature and the volume resistivity of carbon fiber (including uncarbonized carbon fiber and other carbon fiber.) will be described.

That is, the axis of abscissa in Fig. 4 represents the firing temperature (°C) of carbon fiber, and the axis of ordinate represents the value of volume resistivity (ohm·cm) of the carbon fiber in logarithmic notation.

The characteristic curve in Fig. 4 is based on the volume resistivity of the carbon fibers used in Examples 1 to 3 and Comparative Examples 1 and 2, in which the blending components (a) to (c) are the same and only the firing temperature is different, as will be described below.

As can be understood from the characteristic curve in Fig. 4, as the firing temperature (°C) of carbon fiber is higher, the volume resistivity tends to decrease rapidly.

More specifically, when the firing temperature of the carbon fiber is lower than 600°C, the volume resistivity has a value significantly exceeding 1×10⁴ ohm·cm.

Furthermore, when the firing temperature of the carbon fiber is 600 to 800°C, the volume resistivity acquires a value within the range of 1×10⁰ to 1×10⁴ ohm·cm.

In addition, when the firing temperature of the carbon fiber exceeds 1200°C, the volume resistivity has a small value of below 1×10⁻¹ ohm·cm.

Therefore, it could be said that the value of the volume resistivity could be accurately controlled to a value within a predetermined range by adjusting the firing temperature of the carbon fiber to a predetermined range, and moreover, handling is facilitated, while desired antistatic properties and the like are obtained in a predetermined sliding member.

### (7) Saturated moisture percentage

The saturated moisture percentage of the uncarbonized carbon fiber as the blending component (b) can be measured according to JIS K 7209:2000, in which a method for determining the water absorption rate in plastics is specified; however, it is preferable that the saturated moisture percentage of the uncarbonized carbon fiber usually has a value within the range of 1 to 8% by weight.

The reason for this is that by specifying the saturated moisture percentage of the uncarbonized carbon fiber to a value within a predetermined range, when the resin composition for a sliding material is processed into a predetermined sliding member and used as a bearing for an office appliance or the like, excellent sliding properties and the like are obtained more easily in a quantifiable manner over a long period of time.

More specifically, it is because when the saturated moisture percentage has a value of below 1% by weight, the kind, blending amount, and the like of uncarbonized carbon fiber that could be used are limited, and the production efficiency in the production of a predetermined sliding member may be excessively decreased.

On the other hand, it is because when the saturated moisture percentage has a value of exceeding 8% by weight, the dimensional change caused by water absorption becomes large, and it may be difficult for the sliding member to maintain dimensional accuracy.

Therefore, it is more preferable that the saturated moisture percentage has a value within the range of 1.5 to 7% by weight, and even more preferably a value within the range of 2 to 6% by weight.

The saturated moisture percentage of the uncarbonized carbon fiber is measured according to JIS K 7209:2000 as described above; however, the saturated moisture percentage can be measured as a ratio of increased weight due to absorbed moisture with respect to the initial weight.

### (8) Blending amount

It is also preferable that the blending amount of the uncarbonized carbon fiber as the blending component (b) usually has a value within the range of 10 to 400 parts by weight with respect to 100 parts by weight of the resin component as the blending component (a).

The reason for this is that by specifying the blending amount of the uncarbonized carbon fiber as the blending component (b) to a value within a predetermined range, a resin composition for a sliding material which, when processed into a predetermined sliding member, has a friction coefficient and a wear amount equal to or less than predetermined values, could be provided more easily and stably.

More specifically, it is because when the blending amount of the uncarbonized carbon fiber has a value of below 10 parts by weight, when the resin composition for a sliding material is processed into a predetermined sliding member, the friction coefficient may increase, and at the same time, the wear resistance may decrease, or the wear amount may increase.

On the other hand, it is because when the blending amount of the uncarbonized carbon fiber has a value of exceeding 400 parts by weight, when the resin composition for a sliding material is processed into a predetermined sliding member, it may be difficult to adjust the value of the friction coefficient to be within a predetermined range, and the wear amount may increase, or the molding processability at the time of being processed into a sliding member may be notably deteriorated.

Therefore, it is more preferable that the blending amount of the uncarbonized carbon fiber has a value within the range of 30 to 300 parts by weight, and even more preferably a value within the range of 50 to 200 parts by weight.

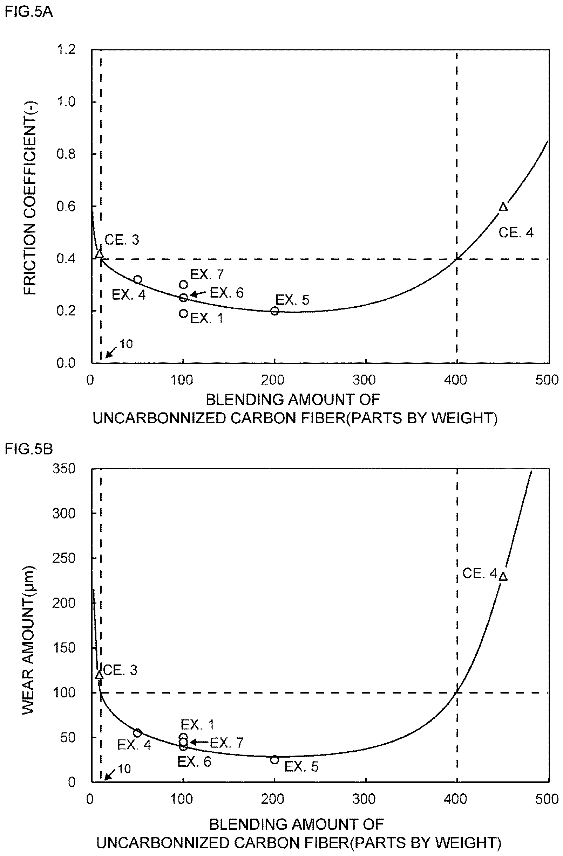

Here, referring to Fig. 5A, the relationship between the blending amount of uncarbonized carbon fiber and the friction coefficient in a case where the resin composition for a sliding material is processed into a sliding member will be described.

That is, the axis of abscissa in Fig. 5A represents the blending amount (parts by weight) of uncarbonized carbon fiber with respect to 100 parts by weight of the resin component as the blending component (a), and the axis of ordinate represents the friction coefficient (-) obtained when the resin composition for a sliding material is processed into a sliding member according to Example 1 or the like that will be described below.

The characteristic curve in Fig. 5A is based on the results related to the friction coefficients of Examples 1 and 4 to 7 and Comparative Examples 3 and 4, in which the kinds of the blending components (a) to (c) are the same, as will be described below.

As can be understood from the characteristic curve described in Fig. 5A, as the blending amount of the uncarbonized carbon fiber is larger, the friction coefficient tends to decrease for the moment and then increase.

More specifically, when the blending amount of the uncarbonized carbon fiber is below 10 parts by weight with respect to 100 parts by weight of the resin component as the blending component (a), the friction coefficient has a value exceeding 0.4; however, when the blending amount is about 10 to 400 parts by weight, although some variation is observed depending on various conditions, the friction coefficient acquires a value of about 0.4 or less.

On the other hand, when the blending amount of the uncarbonized carbon fiber exceeds 400 parts by weight, the friction coefficient has a value exceeding 0.4 again, and when the blending amount is 450 parts by weight, the value of the friction coefficient is about 0.6.

Next, referring to Fig. 5B, the relationship between the blending amount of uncarbonized carbon fiber and the wear amount in a case where the resin composition for a sliding material is processed into a sliding member, will be described.

That is, the axis of abscissa in Fig. 5B represents the blending amount (parts by weight) of uncarbonized carbon fiber, and the axis of ordinate represents the wear amount (µm) when the resin composition for a sliding material is processed into a sliding member according to Example 1 and the like that will be described below.

The characteristic curve in Fig. 5B is based on the results related to the friction coefficients of Examples 1 and 4 to 7 and Comparative Examples 3 and 4, as in the case of Fig. 5A.

As can be understood from the characteristic curve described in Fig. 5B, as the blending amount of uncarbonized carbon fiber becomes larger, the wear amount tends to decrease for the moment and then increase.

More specifically, when the blending amount of the uncarbonized carbon fiber is below 10 parts by weight with respect to 100 parts by weight of the resin component as the blending component (a), the wear amount has a value exceeding 100 µm; however, when the blending amount is about 10 to 400 parts by weight, although some variation is observed depending on various conditions, the wear amount acquires a value of about 100 µm or less.

On the other hand, when the blending amount of the uncarbonized carbon fiber exceeds 400 parts by weight, the wear amount has a value exceeding 100 µm again, and when the blending amount is 450 parts by weight, the wear amount is about 230 µm.

Therefore, by adjusting the blending amount of uncarbonized carbon fiber to a value within the range of 10 to 400 parts by weight, a sliding member obtained by processing the resin composition for a sliding material could obtain excellent sliding properties, that is, a low friction coefficient and a small wear amount.

### 3. Blending component (c)

### (1) Kind

As the blending component (c), a lubricating additive which is a compound that is not included in the resin component of the blending component (a) and exhibits a lubricating effect and the like, is blended.

The reason for this is that by blending such a lubricating additive, together with the blending component (a) and the blending component (b) constituting the resin composition for a sliding material, the lubricating additive could notably improve the sliding properties and the like in a sliding member obtained by processing the resin composition for a sliding material.

The kind of the lubricating additive is not particularly limited as long as it is a compound that exhibits a predetermined lubricating effect; however, the lubricating additive is preferably at least one of polytetrafluoroethylene (PTFE), perfluoroalkoxyalkane (PFA), an ethylene-tetrafluoroethylene copolymer (ETFE), a perfluoroethylene-propene copolymer (FEP), polyvinylidene fluoride (PVDF), silicone grease, silicone oil, a silicone compound, and the like.

Particularly, when the lubricating additive is PTFE, it is because PTFE has a low friction coefficient and could also exhibit satisfactory wear resistance. Furthermore, it is because PTFE could be uniformly mixed and dispersed in, for example, a PPS resin as the resin component of the blending component (a), even when used in a relatively wide range of blending amount.

That is, when PTFE is used, it is preferable that the average particle size (D50 according to a laser diffraction method) has a value within the range of 1 to 50 µm, more preferably a value within the range of 3 to 20 µm, and even more preferably a value within the range of 5 to 10 µm.

### (2) Blending amount 1

Furthermore, it is preferable that the blending amount of the lubricating additive as the blending component (c) usually has a value within the range of 10 to 80 parts by weight with respect to 100 parts by weight of the resin component as the blending component (a).

The reason for this is that when the blending amount of the lubricating additive has a value of below 10 parts by weight, even in a case where the lubricating additive is added to a resin composition for a sliding material, an additive effect of imparting lubricity may not be exhibited.

On the other hand, it is because when the blending amount of the lubricating additive has a value exceeding 80 parts by weight, the mechanical strength and wear resistance of a sliding member obtained by processing the resin composition for a sliding material may be notably decreased.

Therefore, it is more preferable that the blending amount of the lubricating additive has a value within the range of 15 to 60 parts by weight, and even more preferably a value within the range of 20 to 40 parts by weight, with respect to 100 parts by weight of the resin component as the blending component (a).

### (2) Blending amount 2

It is also preferable to determine the blending amount of the lubricating additive as the blending component (c) in relation to the blending amount of the uncarbonized carbon fiber as the blending component (b).

More specifically, it is preferable that the weight ratio of blending component (b)/blending component (c) (hereinafter, may be simply referred to as the ratio of blending amounts b/c.) has a value within the range of 0.5/1 to 30/1.

The reason for this is that by specifying the ratio of blending amounts b/c, when the resin composition for a sliding material is processed into a predetermined sliding member, the sliding member could exhibit excellent sliding properties and the like more easily over a long period of time.

More specifically, it is because when the ratio of blending amounts b/c has a value of below 0.5/1, when the resin composition for a sliding material is processed into a sliding material, it may be difficult to adjust the friction coefficient, the wear amount, and the like to predetermined numerical value ranges.

On the other hand, it is because when the ratio of blending amounts b/c has a value exceeding 30/1, in a case where the resin composition for a sliding material is processed into a sliding member, it may be difficult to adjust at least the wear amount to a predetermined numerical value range.

Therefore, it is more preferable that the ratio of blending amounts b/c has a value within the range of 1/1 to 20/1, and even more preferably a value within the range of 1.5/1 to 10/1.

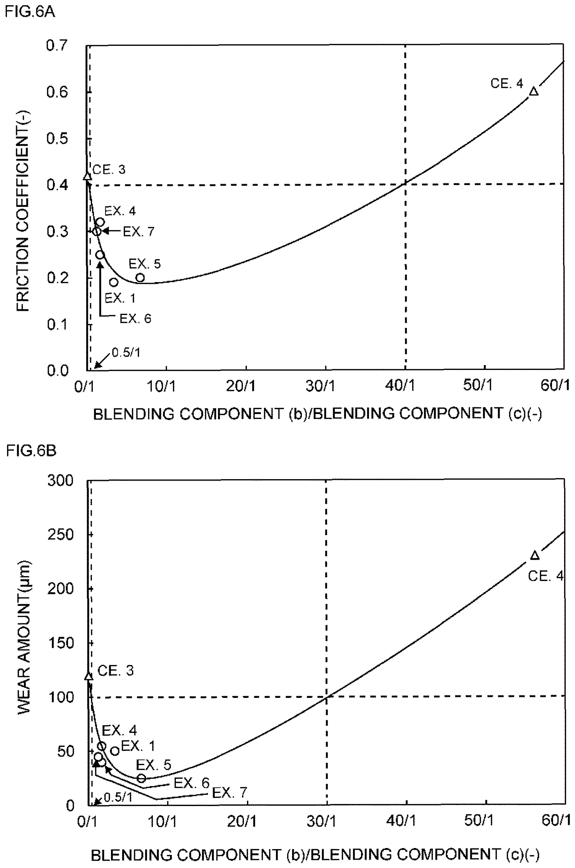

Here, referring to Fig. 6A, the relationship between the ratio of blending amounts b/c and the friction coefficient will be described in relation to the blending amount of the lubricating additive.

That is, the axis of abscissa in Fig. 6A represents blending component (b)/blending component (c) (-), which is the ratio of blending amounts, and the axis of ordinate represents the friction coefficient (-) obtained when the resin composition for a sliding material is processed into a sliding member according to Example 1 and the like that will be described below.

Each data of the characteristic curve in Fig. 6A is based on the friction coefficients of the sliding members of Examples 1 and 4 to 7 and Comparative Examples 3 and 4, in which the kinds of the blending components (a) to (c) are the same and the ratio of blending amounts b/c is different, as will be described.

As can be understood from the characteristic curve in Fig. 6A, on the whole, as the value of the ratio of blending amounts b/c is larger, the friction coefficient tends to increase.

However, even when the value of the ratio of blending amounts b/c becomes excessively small, the friction coefficient conversely tends to increase slightly.

More specifically, when the ratio of blending amounts b/c is near 0/1, the friction coefficient has a value exceeding 0.4; however, when the ratio of blending amounts b/c is 0.5/1 or more, the friction coefficient has a value of 0.4 or less.

Further, when the ratio of blending amounts b/c further exceeds 40/1, the friction coefficient obtains a value exceeding 0.4.

Next, referring to Fig. 6B, the relationship between the ratio of blending amounts b/c and the wear amount will be described in relation to the blending amount of the lubricating additive.

That is, the axis of abscissa in Fig. 6B represents blending component (b)/blending component (c) (-), which is the ratio of blending amounts, and the axis of ordinate represents the wear amount (µm) obtained under predetermined conditions when the resin composition for a sliding material is processed into a sliding member according to Example 1 and the like that will be described below.

Each data of the characteristic curve in Fig. 6B is based on the wear amount in the sliding members of Examples 1 and 4 to 7 and Comparative Examples 3 and 4, as in the case of Fig. 6A.

As can be understood from the characteristic curve in Fig. 6B, on the whole, as the value of the ratio of blending amounts b/c is larger, the wear amount tends to increase.

However, even when the value of the ratio of blending amounts b/c becomes excessively small, the wear amount conversely tends to increase slightly.

More specifically, when the ratio of blending amounts b/c is near 0/1, the wear amount has a value exceeding 100 µm; however, when the ratio of blending amounts b/c is 0.5/1 or more, the wear amount has a value of 100 µm or less.

Further, when the ratio of blending amounts b/c further exceeds 30/1, the wear amount obtains a value exceeding 100 µm.

Therefore, from Fig. 6A and Fig. 6B, it is understood that when the blending amount of the lubricating additive as the blending component (c) is determined such that the ratio of blending amounts b/c is within the range of 0.5/1 to 30/1, the friction coefficient and the wear amount of the sliding member obtained by processing the resin composition for a sliding material could be adjusted to desired ranges more accurately.

### 4. Blending component (d)

### (1) Kind

It is also preferable to blend an inorganic material as a blending component (d), to the extent of achieving the object of the invention.

The reason for this is that by blending an inorganic material as the blending component (d), the mechanical strength and thermal properties of a sliding member obtained by subjecting the resin composition for a sliding material to predetermined processing could be adjusted.

Here, the kind of the inorganic material as the blending component (d) is not particularly limited; however, it is preferable to blend an inorganic material having a Mohs hardness of 6 or less.

More specifically, it is preferable to blend at least one of mica, talc, graphite, gypsum, kaolinite, zinc oxide, titanium oxide, zirconium oxide, and the like.

The reason for this is that since these inorganic materials have low hardness such as a Mohs hardness of 6 or less, when the resin composition for a sliding material is processed into a sliding member, the sliding resistance against the mating material could be reduced, and the friction coefficient could be kept low.

Furthermore, among these inorganic materials, it could be said that talc or mica, both having a Mohs hardness of below 4, or a mixture thereof (for example, mixing weight ratio of talc/mica: 90/10 to 10/90) is more suitable from the viewpoint that satisfactory sliding properties and the like could be exhibited even when the blending amount is a relatively small amount.

To speak further, when the blending component (d) is talc (mineral containing hydrous magnesium silicate: Mg₃Si₄O₁₀(OH)₂ as a main component), it is suitable from the viewpoint that the blending component (d) is relatively inexpensive and could be uniformly mixed with the resin component as the blending component (a).

Furthermore, when the blending component (d) is talc or the above-mentioned mixture of talc/mica, the apparent density is relatively uniform, and the value thereof is relatively low.

More specifically, in the case of talc or the like, it is preferable that the apparent density measured according to JIS K 5101-12:2004 has a value within the range of 0.1 to 0.8 g/ml, more preferably a value within the range of 0.2 to 0.7 g/ml, and even more preferably a value within the range of 0.3 to 0.6 g/ml.

In addition, it could be said that these inorganic materials are more suitable from the viewpoint that even when a sliding member is produced by injection molding, compression molding, or the like, a smooth surface is obtained without interfering with predetermined fluidity.

Furthermore, when an inorganic material is blended as the blending component (d), it is preferable that the average particle size (for example, D50 according to a laser diffraction method; hereinafter, the same.) of the inorganic material as measured according to JIS Z 8825:2013 has a value within the range of 1 to 180 µm.

The reason for this is that when the average particle size is below 1 µm, the particles are likely to aggregate, handling may be difficult, and it may be difficult to uniformly mix the inorganic material with a resin component such as a PPS resin.

On the other hand, it is because when the average particle size is above 180 µm, when a sliding member is produced by injection molding, compression molding, or the like, it may be difficult to obtain a smooth surface.

Therefore, in the case of using an inorganic material such as talc as the blending component (d), it is more preferable that the average particle size has a value within the range of 10 to 110 µm, and even more preferably a value within the range of 15 to 40 µm.

### (2) Blending amount

Furthermore, when an inorganic material is blended as the blending component (d), it is preferable that the blending amount of the blending component (d) usually has a value of 100 parts by weight or less with respect to 100 parts by weight of the resin component as the blending component (a).

The reason for this is that when the blending amount of the blending component (d) has a value exceeding 100 parts by weight, the wear resistance may decrease.

However, when the blending amount of the blending component (d) is excessively small, it may be difficult to finely adjust the mechanical strength and the thermal properties.

Therefore, when an inorganic material is blended as the blending component (d), it is more preferable that the blending amount thereof has a value within the range of 0.01 to 80 parts by weight, and even more preferably a value within the range of 0.1 to below 50 parts by weight, with respect to 100 parts by weight of the resin component as the blending component (a).

### 5. Other blending component (e)

### (1) Kind

As blending components (e), it is also preferable to blend various additives for achieving various purposes, which are compounds other than the above-mentioned blending components (a) to (d).

For example, in order to further improve the friction properties, it is preferable to blend at least one of a modified polyolefin resin; lubricating oils such as mineral oil, ester oil, and silicone oil; waxes such as polyethylene wax, oxidized polyethylene wax, ester wax, and partially saponified wax; and solid lubricants such as graphite, boron nitride, molybdenum disulfide, and tungsten disulfide.

Particularly, among oxidized polyethylene waxes, an oxidized polyethylene wax having a melting point of 120°C or higher is preferred from the viewpoint of contributing to uniform miscibility of various blending components even when a relatively small amount is blended, while maintaining mechanical strength, heat resistance, and the like of the sliding member, and further facilitating the adjustment of lubricity, moldability, and the like.

On the other hand, graphite is suitable from the viewpoint that it is relatively easy to adjust lubricity, moldability, electrical conductivity, concealability, and the like by appropriately changing the blending amount and morphology (average particle size and scale shape) of graphite.

### (2) Blending amount

Furthermore, when graphite or the like is blended as the blending component (e), it is preferable that the blending amount thereof usually has a value within the range of 1 to 50 parts by weight with respect to 100 parts by weight of the resin component as the blending component (a) .

The reason for this is that although it depends on the kind of the blending component (e), when the blending amount has a value of below 1 part by weight, the blending effect, particularly the effect of lubricity and the like, may not be exhibited.

On the other hand, it is because when the blending amount of the blending component (e) has a value exceeding 50 parts by weight, it may be difficult to uniformly mix the blending component (e) with the resin component as the blending component (a), or conversely, it may be difficult to adjust lubricity, moldability, electrical conductivity, concealability, and the like.

Therefore, it is more preferable that the blending amount of the blending component (e) has a value within the range of 1.5 to 30 parts by weight, and even more preferably a value within the range of 2 to 10 parts by weight, with respect to 100 parts by weight of the resin component as the blending component (a).

### 6. Production method

It is preferable that the resin composition for a sliding material of the invention is produced as a mixture with a mixing device such as a Henschel mixer, a super mixer, a ball mill, or a tumbler mixer, while weighing various blending components such that the blending amounts of the blending components in the resin composition are in predetermined ranges.

Next, when the resin component as the blending component (a) in the resin composition for a sliding material is a thermoplastic resin, it is preferable that the mixture is fed into a vented single-screw or twin-screw extruder or a non-vented single-screw or twin-screw extruder and melt-kneaded to be molded into a string-shaped molded product, and then the molded product is cut to produce particulate molding material pellets.

By making such molding material pellets, the resin composition for a sliding material could be molded into a desired shape such as a cylinder bush or a plate-shaped body by molding means such as an injection molding apparatus in the method for producing a sliding member that will be described below.

When the resin component as the blending component (a) of the resin composition for a sliding material is a thermosetting resin, it is preferable that the resin composition for a sliding material is produced into a mixture in the above-described mixing device, and then the mixture is charged into a mold for compression molding.

In this way, the resin composition for a sliding material that has been charged into a mold could be cured by applying heat and pressure with a heat pressing machine for a predetermined time, and after the compression molding, by drying the resin composition for a sliding material for a predetermined time in a drying furnace and sufficiently allowing a curing reaction to proceed, a desired sliding member could be obtained.

### [Second embodiment]

A second embodiment is a sliding member derived from a resin composition for a sliding material including the following blending components (a) to (c):
(a) 100 parts by weight of a resin component;
(b) 10 to 400 parts by weight of uncarbonized carbon fiber having a 5% weight loss temperature of 400 to 550°C; and
(c) 10 to 80 parts by weight of a lubricating additive.

### 1. Basic configuration

Examples of a mechanical device or the like that uses the sliding member of the second embodiment include office appliances and submersible pumps.

More specifically, in the case of a copying machine as an office appliance, essentially any configuration is suitable as long as it includes various roller parts that use a sliding member such as a slide bearing.

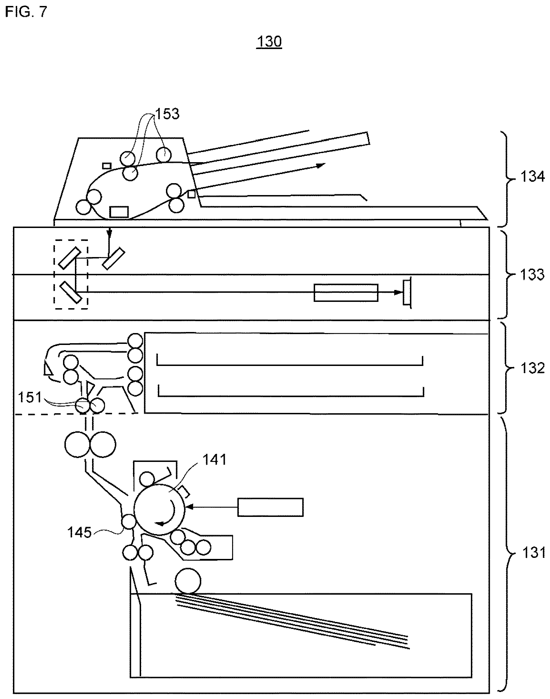

A typical example is a copying machine 130 shown in Fig. 7, which is a copying machine including: 1) an image forming unit 131; 2) a paper discharging unit 132; 3) an image reading unit 133; and 4) a document feeding unit 134.

Sliding members could be suitably applied to an electrophotographic photosensitive member 141 and a transfer roller 145 as rotating bodies in the image forming unit 131, to a paper discharging roller 151 in the paper discharging unit 132, and to a feeding roller 153 in the document feeding unit 134.

Furthermore, in the case of a submersible pump, essentially a submersible pump of any configuration is suitable as long as it is a submersible pump that uses a sliding member such as a slide bearing.

Therefore, for example, typically, a submersible pump having: 1) an impeller; 2) a shaft for fixing the impeller; 3) a slide bearing fixed to the impeller for supporting the impeller in a freely rotatable manner relative to the shaft; 4) a thrust-bearing member that slides against the respective end faces of the slide bearing; and 5) a casing and a cover that house the impeller and form a pump chamber, could be suitably applied.

### 2. Sliding member

### (1) Resin composition for a sliding material

The resin composition for a sliding material that is used for a sliding member of the second embodiment could be similar to the contents described in the first embodiment.

Therefore, duplicate description of the resin composition for a sliding material will not be repeated here.

### (2) Sliding member derived from resin composition for a sliding material

The basic configuration of a sliding member that includes uncarbonized carbon fiber and is obtained from a resin composition for a sliding material, is not particularly limited, and various modifications could be made therein.

That is, regarding the slide bearing, which is a sliding member that is provided to a copying machine and a submersible pump, at least one or a plurality of slide bearings may be provided; however, as a basic configuration, it is preferable that the slide bearing is a cylindrical-shaped bearing or flanged bearing that receives load on the inner diameter and the end faces and has the same thickness as the end faces.

Further, since these sliding members could exhibit toughness when formed into sliding members, it is preferable that the sliding members are injection molded articles derived from a resin composition for a sliding material containing a linear polyphenylene sulfide resin as a base resin.

### 3. Production method

The method for producing a sliding member derived from a resin composition for a sliding material is not particularly limited; however, typically, it is preferable to use an injection molding method or a compression molding method.

### (1) Injection molding method

That is, according to an injection molding method, as an example, a predetermined sliding member could be produced by the following steps 1) to 5).
1) An injection molding apparatus is prepared.
2) A resin composition for a sliding material in the form of a molding material pellet is charged, while being weighed, into a hopper or the like of an injection molding apparatus.
3) The resin composition for a sliding material is brought into a molten state by a heating device of the injection molding apparatus.
4) The resin composition for a sliding material in a molten state is injection-molded into a predetermined mold by using the injection molding apparatus.
5) After cooling, a predetermined sliding member is taken out.

### (2) Compression molding method

According to a die molding method, although this is another example, a predetermined sliding member could be produced by the following steps 1') to 4').
1') A predetermined molding die is prepared.
2') A resin composition for a sliding material as a mixture mixed by a mixing machine is charged into a predetermined place of a molding die.
3') The resin composition for a sliding material is cured by applying heat and pressure with a heat pressing machine for a certain period of time.
4') After the compression molding, the resultant is dried for a predetermined time in a drying furnace, and then a predetermined sliding member is taken out.

### 4. Property 1 (friction coefficient)

Furthermore, the friction coefficient of the sliding member can be measured according to JIS K 7218:1986 using a thrust unidirectional rotation method under the following conditions.
Sliding speed: 10 m/min
Load (surface pressure): 10 kg/cm²
Testing time: 8 hours
Test piece: Square plate having a size of 30 mm (breadth) × 30 mm (longitudinal width) × 3 mm (thickness)
Mating material: Hollow cylindrical shape (made of an aluminum alloy (A5052), inner diameter 20 mm, outer diameter 25.6 mm, length 30 mm, surface roughness Ra 0.4)
Lubrication: No lubrication

It is usually suitable that the friction coefficient is 0.4 or less.

The reason for this is that when the friction coefficient exceeds 0.4, the sliding properties and durability of the sliding member may be notably deteriorated.

Although it may vary depending on the purpose, morphology, and the like of the sliding member, it is more preferable that the friction coefficient is 0.1 to 0.35 or less, and even more preferably has a value within the range of 0.15 to 0.3.

Here, referring to Fig. 1A again, the relationship between the firing temperature of carbon fiber (including uncarbonized carbon fiber and other carbon fiber.) and the friction coefficient of a sliding member including the carbon fiber, will be described.

That is, the axis of abscissa in Fig. 1A represents the firing temperature (°C) of carbon fiber, and the axis of ordinate shows the relationship with the friction coefficient (-) obtained when a resin composition for a sliding material prepared by blending carbon fiber that has been fired at a predetermined temperature, is processed into a sliding member.

Further, each data of the characteristic curve in Fig. 1A is based on the friction coefficients of Examples 1 to 3 and Comparative Examples 1 and 2, in which the kinds and blending amounts of the blending components (a) to (c) are the same, and only the firing temperature of carbon fiber is different, as will be described below.

As can be understood from the characteristic curve described in Fig. 1A, as the firing temperature (°C) of carbon fiber is lower, the friction coefficient of the sliding member tends to decrease.

More specifically, it is understood that when the firing temperature (°C) of carbon fiber is about 1200°C, the friction coefficient of the sliding member could be adjusted to a value of 0.4 or less, and when the firing temperature (°C) of carbon fiber is about 800°C, the friction coefficient could be adjusted to a value of about 0.2.

### 5. Property 2 (endurance time)

Furthermore, the endurance time as a measure for the sliding properties of a sliding member can be measured using the above-mentioned thrust unidirectional rotation method.

Usually, as a measure for satisfactory sliding properties, it is suitable that the endurance time of the sliding member is 6 hours or longer.

However, although it may vary depending on the purpose, morphology, and the like of the sliding member, it is more preferable that the endurance time is 7 hours or longer, and even more preferably 8 hours or longer.

### 6. Property 3 (wear amount)

Furthermore, the wear amount as another measure for the sliding properties of a sliding member can be measured using the above-mentioned thrust unidirectional rotation method under similar conditions.

That is, the thrust unidirectional rotation method is performed for a predetermined time (8 hours), the change in thickness of a test piece formed from a sliding member after a lapse of 8 hours is calculated from the initial value, and the change in thickness could be taken as the wear amount.

Usually, as a measure for satisfactory sliding properties, it is suitable that the wear amount of the test piece is 100 µm or less.

However, although it may vary depending on the purpose, morphology, and the like of the sliding member, it is more preferable that the wear amount of the test piece is 80 µm or less, and even more preferably 50 µm or less.

When a melting phenomenon is recognized in the test piece before 8 hours have elapsed, the test according to the thrust unidirectional rotation method is terminated at that time point, the change in thickness is calculated from the initial value of the test piece formed from the sliding member, and the change in thickness is taken as the wear amount.

Furthermore, referring to Fig. 1B, the relationship between the firing temperature of carbon fiber (including uncarbonized carbon fiber and other carbon fiber.) and the above-mentioned wear amount of a sliding member including the carbon fiber will be described.

That is, the axis of abscissa in Fig. 1B represents the firing temperature (°C) of carbon fiber, and the axis of ordinate indicates the relationship with the wear amount (µm) under the above-mentioned measurement conditions in a case where a resin composition for a sliding material prepared by blending carbon fiber that has been fired at a predetermined temperature, is processed into a sliding member.

Further, each data of the characteristic curve in Fig. 1B is based on the wear amounts of Examples 1 to 3 and Comparative Examples 1 and 2, in which the kinds and blending amounts of the blending components (a) to (c) are the same, and only the firing temperature of carbon fiber is different, as will be described below.

As can be understood from the characteristic curve in Fig. 1B, as the firing temperature (°C) of the carbon fiber increases, the wear amount tends to decrease for the moment and then increase.

More specifically, when the firing temperature (°C) of the carbon fiber is below 600°C, the wear amount has a value exceeding 100 µm, and when the firing temperature is 600°C or higher, the wear amount has a value of 100 µm or less.

Further, when the firing temperature (°C) of the carbon fiber exceeds 800°C, the wear amount has a value exceeding 100 µm, and when the firing temperature is 1200°C, the wear amount has a value exceeding 600 µm.

Therefore, from the characteristic curves in Fig. 1A and Fig. 1B, it could be said that by adjusting the firing temperature (°C) of carbon fiber to a predetermined range (600 to 800°C), when the resin composition for a sliding material is processed into a sliding member, a low friction coefficient and a low wear amount are obtained, and moreover, excellent sliding properties are obtained.

### EXAMPLES

Hereinafter, the invention will be described in detail based on Examples. However, the scope of rights of the invention is not to be narrowed by the description of Examples without any particular reason.

Furthermore, the resin as the blending component (a), the uncarbonized carbon fiber as the blending component (b), the lubricating additive as the blending component (c), and the like used in the Examples are as follows.
(A) Blending component (a)
   (A-1) Polyphenylene sulfide resin (PPS resin) (manufactured by Polyplastics Co., Ltd., trade name "DURAFIDE", as of PPS resin: linear polymer)
   (A-2) Polyether ether ketone resin (PEEK resin) (manufactured by Solvay Specialty Polymers USA, LLC, trade name "KETASPIRE")
   (A-3) Polyether sulfone resin (PES resin) (manufactured by SUMITOMO CHEMICAL COMPANY, LIMITED, trade name "SUMIKAEXCEL")
   (A-4) Polyamide resin (PA resin) (manufactured by UNITIKA LTD., trade name "XECOT")
   (A-5) Polyacetal resin (POM resin) (manufactured by Mitsubishi Engineering-Plastics Corporation, trade name "IUPITAL")
(B) Blending component (b)
   (B-1) Isotropic pitch uncarbonized carbon fiber 1 (firing temperature: 700°C, firing time: 30 minutes, average diameter: 15 µm, average length: 200 µm, saturated moisture percentage: 5.8% by weight)
   (B-2) Isotropic pitch uncarbonized carbon fiber 2 (firing temperature: 650°C, firing time: 30 minutes, average diameter: 15 µm, average length: 200 µm, saturated moisture percentage: 5.5% by weight)
   (B-3) Isotropic pitch uncarbonized carbon fiber 3 (firing temperature: 750°C, firing time: 30 minutes, average diameter: 15 µm, average length: 200 µm, saturated moisture percentage: 6.5% by weight)
(B') Carbon fiber corresponding to blending component (b)
   (B'-1) Isotropic pitch carbon fiber 1 (firing temperature: 450°C, firing time: 30 minutes, average diameter: 15 µm, average length: 200 µm, saturated moisture percentage: 8.5% by weight)
   (B'-2) Isotropic pitch carbon fiber 2 (firing temperature: 1300°C, firing time: 30 minutes, average diameter: 15 µm, average length: 200 µm, saturated moisture percentage: 0.5% by weight)
(C) Blending component (c)
   (C-1) Polytetrafluoroethylene (PTFE) (manufactured by AGC Inc., trade name "FLUON (registered trademark) PTFE", average particle size: 5 µm)
   (C-2) Perfluoroalkoxyalkane (PFA) (manufactured by Daikin Industries, Ltd., trade name "NEOFLON", average particle size: 5 µm)
   (C-3) Ethylene-tetrafluoroethylene copolymer (ETFE) (manufactured by AGC Inc., trade name "FLUON (registered trademark) ETFE", average particle size: 5 µm)

### [Example 1]

### 1. Production of resin composition for a sliding material and member for evaluation

### (1) Production of resin composition for a sliding material

As shown in Table 1, 100 parts by weight (pbw) of B-1 as the uncarbonized carbon fiber of the blending component (b) and 30 parts by weight of C-1 as the lubricating additive of the blending component (c) were weighed with respect to 100 parts by weight of a PPS resin as A-1, which is the resin component of the blending component (a), and the components were accommodated in a predetermined container with a stirrer.

Furthermore, as shown in Table 2, it was separately verified using TGA that only for the uncarbonized carbon fiber of the blending component (b), the TG5 was 450°C.

In addition, it was separately verified by XPS elemental analysis that the amount of carbon on the surface of the uncarbonized carbon fiber of the blending component (b) was 93% by weight.

Next, the blending components (a) to (c) were stirred to become uniform using a mixer having a capacity of 20 L as a stirrer under the conditions of a speed of rotation of 400 rpm for 90 seconds, and a resin composition for a sliding material was obtained.

Next, the obtained resin composition for a sliding material was dried using a heating furnace heated to 130°C in the atmosphere, and a resin composition for a sliding material (powder form) having a moisture percentage of 0.01% by weight or less was obtained.

Next, the obtained resin composition for a sliding material (powder form) was melt kneaded using a twin-screw extruder, and a composition in a pellet form was obtained.

### (2) Production of member for evaluation

The obtained resin composition for a sliding material (pellet form) was charged into a predetermined mold using an injection molding apparatus, and then a member for evaluation was obtained by pressure-molding the resin composition into a plate shape having a size of 30 mm (breadth) × 30 mm (longitudinal width) × 3 mm (thickness) under predetermined pressurization conditions (for example, 10 to 200 MPa).

The member for evaluation is a substitute member for evaluating various properties of a sliding member obtained from the resin composition for a sliding material, and is used for Evaluations 6 to 8 that will be described below.

### 2. Evaluation of resin composition for a sliding material and sliding member

### (1) Evaluation 1 (firing temperature)

The firing temperature of carbon fiber was evaluated according to the following evaluation criteria. The results are shown in Table 2 as Eva 1.
⊙(Very good): The temperature is 650 to 750°C.
○(Good): The temperature is 600 to below 650°C, or above 750 to 800°C.
△(Fair): The temperature is 500 to below 600°C, or above 800 to 1000°C.
×(Bad): The temperature is below 500 or above 1000°C.

### (2) Evaluation 2 (tensile modulus)

The tensile modulus of carbon fiber was measured according to JIS R 7606:2000, and evaluated according to the following evaluation criteria. The results are shown in Table 2 as Eva 2.
⊙(Very good): The tensile modulus is 15 to 25 GPa.
○(Good): The tensile modulus is 10 to below 15 GPa, or above 25 to 35 GPa.
△(Fair): The tensile modulus is 1 to below 10 GPa, or above 35 to 50 GPa.
×(Bad): The tensile modulus is below 1 GPa, or above 50 GPa.

### (3) Evaluation 3 (tensile elongation)

The tensile elongation of carbon fiber was measured according to JIS R 7606:2000 and evaluated according to the following evaluation criteria. The results are shown in Table 2 as Eva 3.
⊙(Very good): The tensile elongation is 2.3 to 4%.
○(Good): The tensile elongation is 2% to below 2.3%, or above 4 to 5%.
△(Fair): The tensile elongation is 1.5% to below 2%, or above 5 to 6%.
×(Bad): The tensile elongation is below 1.5% or above 6%.

### (4) Evaluation 4 (volume resistivity)

The volume resistivity of carbon fiber was measured by a four-terminal method using a digital voltmeter and evaluated according to the following evaluation criteria. The results are shown in Table 2 as Eva 4.
⊙(Very good): The volume resistivity is 5×10⁰ to 1×10³ ohm·cm.
○(Good): The volume resistivity is 1×10⁰ to below 5×10⁰ ohm·cm, or above 1×10³ to 1×10⁴ ohm·cm.
△(Fair): The volume resistivity is 1×10⁻¹ to below 1×10⁰ ohm·cm, or above 1×10⁴ to 1×10⁵ ohm·cm.
×(Bad) : The volume resistivity is below 1×10⁻¹ ohm·cm or above 1×10⁵ ohm·cm.

### (5) Evaluation 5 (TG5)

The TG5 (5% weight loss temperature) of carbon fiber was measured using a TGA (manufactured by Mettler-Toledo International, Inc., product name "TGA/SDTA851e") under the conditions of an air flow rate of 100 ml/min and a temperature increase rate of 5°C/min, and was evaluated according to the following evaluation criteria. The results are shown in Table 2 as Eva 5.
⊙(Very good): The TG5 is 430 to 500°C.
○(Good): The TG5 is 400 to below 430°C, or above 500 to 550°C.
△(Fair): The TG5 is 350 to below 400°C, or above 550 to 600°C.
×(Bad): The TG5 is below 350°C, or above 600°C.

### (6) Evaluation 6 (friction coefficient)

The friction coefficient as one of the measures of the sliding properties of a sliding member was measured for the member for evaluation according to JIS K 7218:1986 using the above-mentioned thrust unidirectional rotation method under the above-mentioned predetermined conditions, and then was evaluated according to the following evaluation criteria. The results are shown in Table 2 as Eva 6.
⊙(Very good): The friction coefficient is 0.2 or less.
○(Good): The friction coefficient is 0.3 or less.
△(Fair): The friction coefficient is 0.4 or less.
×(Bad): The friction coefficient is above 0.4.

### (7) Evaluation 7 (endurance time)

The endurance time as one of the measures of the sliding properties of a sliding member was measured for the member for evaluation according to JIS K 7218:1986 using the above-mentioned thrust unidirectional rotation method by measuring the time taken until a melting phenomenon occurred, and the endurance time was evaluated according to the following evaluation criteria. The results are shown in Table 2 as Eva 7.
○(Very good): The melting phenomenon was not observed over a period of 8 hours.
○(Good): The melting phenomenon was not observed over a period of 6 hours or more.
△(Fair): The melting phenomenon was not observed over a period of 1 hour or more.
×(Bad): The melting phenomenon was observed in below 1 hour.

### (8) Evaluation 8 (wear amount)

The wear amount as one of the measures of the sliding properties of a sliding member was measured for the member for evaluation according to JIS K 7218:1986 using the above-mentioned thrust unidirectional rotation method after a lapse of 8 hours, and the wear amount was evaluated according to the following evaluation criteria. The results are shown in Table 2 as Eva 8.

When the melting phenomenon was recognized in the member for evaluation before 8 hours had elapsed, the test according to the thrust unidirectional rotation method was terminated at that time point, the change in thickness was calculated from the initial value of the member for evaluation, and the change in thickness was taken as the wear amount.
⊙(Very good): The wear amount is 50 µm or less.
○(Good): The wear amount is 80 µm or less.
△(Fair): The wear amount is 100 µm or less.
×(Bad): The wear amount is above 100 µm.

### [Examples 2 and 3]

In Examples 2 and 3, resin compositions for a sliding material and members for evaluations were produced in the same manner as in Example 1, except that B-2 and B-3 were used as the uncarbonized carbon fiber of the blending component (b), and each of them was evaluated. The obtained evaluation results and the like are shown in Table 1 and Table 2.

As shown in Table 2, it was separately verified using a TGA that only for the uncarbonized carbon fiber as the blending component (b), the TG5 values were 440 and 460°C, respectively.

In addition, it was separately verified by XPS elemental analysis that the amounts of carbon on the surface of the uncarbonized carbon fiber as the blending component (b) were 90% by weight and 95% by weight, respectively.

### [Examples 4 and 5]

In Examples 4 and 5, resin compositions for a sliding material and members for evaluation were produced in the same manner as in Example 1, except that the blending amounts of the uncarbonized carbon fiber as the blending component (b) were changed to 50 parts by weight and 200 parts by weight, respectively, with respect to 100 parts by weight of the resin component as the blending component (a), and evaluation was performed. The obtained evaluation results and the like are shown in Table 1 and Table 2.

### [Examples 6 and 7]

In Examples 6 and 7, resin compositions for a sliding material and members for evaluation were produced in the same manner as in Example 1, except that the blending amounts of the lubricating additive as the blending component (c) were changed to 60 parts by weight and 80 parts by weight, respectively, with respect to 100 parts by weight of the resin component as the blending component (a), and each of them was evaluated. The obtained evaluation results and the like are shown in Table 1 and Table 2.

### [Examples 8 to 11]

In Examples 8 to 11, resin compositions for a sliding material and members for evaluation were produced in the same manner as in Example 1, except that the kind of the resin component as the blending component (a) was changed to A-2, A-3, A-4, and A-5, respectively, and each of them was evaluated. The obtained evaluation results and the like are shown in Table 1 and Table 2.

### [Examples 12 and 13]

In Examples 12 and 13, resin compositions for a sliding material and members for evaluation were produced in the same manner as in Example 1, except that the kind of the lubricating additive as the blending component (c) was changed to C-2 and C-3, respectively, and each of them was evaluated. The obtained evaluation results and the like are shown in Table 1 and Table 2.

### [Comparative Examples 1 and 2]

In Comparative Examples 1 and 2, resin compositions for a sliding material and members for evaluation were produced in the same manner as in Example 1, except that the carbon fiber corresponding to the blending component (b) was changed to B'-1 and B'-2, respectively, and each of them was evaluated. The obtained evaluation results and the like are shown in Table 1 and Table 2.

As shown in Table 2, it was separately verified using a TGA that only for the carbon fiber corresponding to the blending component (b), the TG5 values were 390 and 560°C, respectively.

In addition, it was separately verified by XPS elemental analysis that the amounts of carbon on the surface of the carbon fiber corresponding to the blending component (b) were 84% by weight and 97% by weight, respectively.

### [Comparative Examples 3 and 4]

In Comparative Examples 3 and 4, resin compositions for a sliding material and members for evaluation were produced in the same manner as in Example 1, except that the blending amount of the uncarbonized carbon fiber as the blending component (b) was changed to 8 parts by weight and 450 parts by weight, respectively, and the blending amount of the lubricating additive as the blending component (c) was changed to 100 parts by weight and 8 parts by weight, respectively, with respect to 100 parts by weight of the resin component as the blending component (a), and each of them was evaluated. The obtained evaluation results and the like are shown in Table 1 and Table 2.

**[Table 1]**

| | Blending component (a) | | Blending component (b) | | | Blending component (c) | |
|---|---|---|---|---|---|---|---|
| | Kind | Blending amount (pbw) | Kind | Firing temperature (°C) | Blending amount (pbw) | Kind | Blending amount (pbw) |
| Example 1 | A-1 | 100 | B-1 | 700 | 100 | C-1 | 30 |
| Example 2 | A-1 | 100 | B-2 | 650 | 100 | C-1 | 30 |
| Example 3 | A-1 | 100 | B-3 | 750 | 100 | C-1 | 30 |
| Example 4 | A-1 | 100 | B-1 | 700 | 50 | C-1 | 30 |
| Example 5 | A-1 | 100 | B-1 | 700 | 200 | C-1 | 30 |
| Example 6 | A-1 | 100 | B-1 | 700 | 100 | C-1 | 60 |
| Example 7 | A-1 | 100 | B-1 | 700 | 100 | C-1 | 80 |
| Example 8 | A-2 | 100 | B-1 | 700 | 100 | C-1 | 30 |
| Example 9 | A-3 | 100 | B-1 | 700 | 100 | C-1 | 30 |
| Example 10 | A-4 | 100 | B-1 | 700 | 100 | C-1 | 30 |
| Example 11 | A-5 | 100 | B-1 | 700 | 100 | C-1 | 30 |
| Example 12 | A-1 | 100 | B-1 | 700 | 100 | C-2 | 30 |
| Example 13 | A-1 | 100 | B-1 | 700 | 100 | C-3 | 30 |
| Comparative Example 1 | A-1 | 100 | B'-1 | 450 | 100 | C-1 | 30 |
| Comparative Example 2 | A-1 | 100 | B' -2 | 1300 | 100 | C-1 | 30 |
| Comparative Example 3 | A-1 | 100 | B-1 | 700 | 8 | C-1 | 100 |
| Comparative Example 4 | A-1 | 100 | B-1 | 700 | 450 | C-1 | 8 |

**[Table 2]**

| | Tensile modulus (GPa) | Tensile elongation (%) | Volume resistivity (ohm·cm) | TG5 (°C) | Friction coefficient (-) | Endurance time (h) | Wear amount (µm) | Eva 1 | Eva 2 | Eva 3 | Eva 4 | Eva 5 | Eva 6 | Eva 7 | Eva 8 |
|---|---|---|---|---|---|---|---|---|---|---|---|---|---|---|---|
| Example 1 | 18 | 2.2 | 1×10² | 450 | 0.19 | 8 | 50 | ⊙ | ⊙ | ○ | ⊙ | ⊙ | ⊙ | ⊙ | ⊙ |
| Example 2 | 16 | 2.3 | 1×10³ | 440 | 0.19 | 8 | 70 | ⊙ | ⊙ | ⊙ | ⊙ | ⊙ | ⊙ | ⊙ | ○ |
| Example 3 | 20 | 2.1 | 1x10¹ | 460 | 0.2 | 8 | 45 | ⊙ | ⊙ | ○ | ⊙ | ⊙ | ⊙ | ⊙ | ⊙ |
| Example 4 | 18 | 2.2 | 1×10² | 450 | 0.32 | 8 | 55 | ⊙ | ⊙ | ○ | ⊙ | ⊙ | △ | ⊙ | ○ |
| Example 5 | 18 | 2.2 | 1×10² | 450 | 0.2 | 8 | 25 | ⊙ | ⊙ | ○ | ⊙ | ⊙ | ⊙ | ⊙ | ⊙ |
| Example 6 | 18 | 2.2 | 1×10² | 450 | 0.25 | 8 | 40 | ⊙ | ⊙ | ○ | ⊙ | ⊙ | ○ | ⊙ | ⊙ |
| Example 7 | 18 | 2.2 | 1×10² | 450 | 0.3 | 8 | 45 | ⊙ | ⊙ | ○ | ⊙ | ⊙ | ○ | ⊙ | ⊙ |
| Example 8 | 18 | 2.2 | 1×10² | 450 | 0.3 | 8 | 95 | ⊙ | ⊙ | ○ | ⊙ | ⊙ | ○ | ⊙ | Δ |
| Example 9 | 18 | 2.2 | 1×10² | 450 | 0.28 | 8 | 35 | ⊙ | ⊙ | ○ | ⊙ | ⊙ | ○ | ⊙ | ⊙ |
| Example 10 | 18 | 2.2 | 1×10² | 450 | 0.3 | 8 | 48 | ⊙ | ⊙ | ○ | ⊙ | ⊙ | ○ | ⊙ | ⊙ |
| Example 11 | 18 | 2.2 | 1×10² | 450 | 0.23 | 8 | 10 | ⊙ | ⊙ | ○ | ⊙ | ⊙ | ○ | ⊙ | ⊙ |
| Example 12 | 18 | 2.2 | 1×10² | 450 | 0.3 | 8 | 55 | ⊙ | ⊙ | ○ | ⊙ | ⊙ | ○ | ⊙ | ○ |
| Example 13 | 18 | 2.2 | 1×10² | 450 | 0.3 | 8 | 60 | ⊙ | ⊙ | ○ | ⊙ | ⊙ | ○ | ⊙ | ○ |
| Comparative Example 1 | 0.5 | 0.4 | 5xl0⁴ | 390 | 0.2 | 1.5 | 250 | × | × | × | Δ | Δ | ⊙ | Δ | × |
| Comparative Example 2 | 38 | 1. 9 | 5×10⁻² | 560 | 0.5 | 1.8 | 740 | × | Δ | Δ | × | Δ | × | Δ | × |
| Comparative Example 3 | 18 | 2.2 | 1×10² | 450 | 0.42 | 8 | 120 | ⊙ | ⊙ | ○ | ⊙ | ⊙ | × | ⊙ | × |
| Comparative Example 4 | 18 | 2.2 | 1×10² | 450 | 0.6 | 0.5 | 230 | ⊙ | ⊙ | ○ | ⊙ | ⊙ | × | × | × |

| | | | | | | | | | | | | | | | |
|---|---|---|---|---|---|---|---|---|---|---|---|---|---|---|---|
| *Eva 1: Firing temperature *Eva 2: Tensile modulus *Eva 3: Tensile elongation *Eva 4: Volume resistivity *Eva 5: TG5 *Eva 6: Friction coefficient *Eva 7: Endurance time *Eva 8: Wear amount | | | | | | | | | | | | | | | |

### INDUSTRIAL APPLICABILITY

As described above, according to the resin composition for a sliding material of the invention, as the resin composition for a sliding material contains uncarbonized carbon fiber as a blending component (b) and a lubricating additive as a blending component (c) in predetermined proportions with respect to a resin component as a blending component (a), when the resin composition is processed into a sliding member, satisfactory sliding properties and the like could be exhibited under dry conditions.

That is, when the resin composition for a sliding material is processed into a predetermined sliding member, a sliding member that has a friction coefficient and a wear amount as sliding properties equal to or less than predetermined values and exhibits satisfactory sliding properties and the like could be provided.

More specifically, even when the mating material is a soft metal such as an aluminum alloy, the friction coefficient is low, and the wear amount could be reduced over a long period of time.

It has been found that when a predetermined sliding member obtained by processing the resin composition for a sliding material of the invention is used, the wear amount of the mating material could be suppressed to an extremely low value such as 20 µm or less in the above-described Evaluation 8, and damage to the mating material could be suppressed to the minimum.

Therefore, the resin composition for a sliding material of the invention could be used in a wide range of fields as various sliding members, and particularly, the resin composition for a sliding material could be suitably used by being processed into sliding members such as bearings for automobile parts, electric and electronic products, office appliances, and the like, which are always assumed to be used under dry conditions.

## Claims

1. A resin composition for a sliding material, comprising the following blending components (a) to (c):
(a) 100 parts by weight of a resin component;
(b) 10 to 400 parts by weight of uncarbonized carbon fiber having a 5% weight loss temperature of 400 to 550°C; and
(c) 10 to 80 parts by weight of a lubricating additive.

2. The resin composition for a sliding material according to claim 1, wherein a tensile modulus of the blending component (b) as measured according to JIS R 7606:2000 has a value within a range of 10 to 35 GPa.

3. The resin composition for a sliding material according to claim 1 or 2, wherein a tensile elongation of the blending component (b) as measured according to JIS R 7606:2000 has a value within a range of 2 to 5%.

4. The resin composition for a sliding material according to any one of claims 1 to 3, wherein an amount of carbon on a surface of the blending component (b) as determined by XPS elemental analysis has a value within a range of 85 to 96% by weight with respect to a total amount.

5. The resin composition for a sliding material according to any one of claims 1 to 4, wherein a weight ratio of blending component (b)/blending component (c) has a value within a range of 0.5/1 to 30/1.

6. The resin composition for a sliding material according to any one of claims 1 to 5, wherein the blending component (a) is at least one selected from the group consisting of a polyphenylene sulfide resin, a polyether sulfone resin, a polyether ether ketone resin, a polyimide resin, a polyamide resin, a polyacetal resin, a polytetrafluoroethylene resin, a polyketone resin, a thermosetting phenol resin, an epoxy resin, a melamine resin, a diallyl phthalate resin, and an unsaturated polyester resin.

7. A sliding member derived from a resin composition for a sliding material including the following components (a) to (c):
(a) 100 parts by weight of a resin component;
(b) 10 to 400 parts by weight of uncarbonized carbon fiber having a 5% weight loss temperature of 400 to 550°C; and
(c) 10 to 80 parts by weight of a lubricating additive.
